# EUROPÄISCHE PATENTSCHRIFT

(11) **EP 2 951 465 B1**
(45) Veröffentlichungstag und Bekanntmachung des Hinweises auf die Patenterteilung: **25.01.2017**
(21) Anmeldenummer: 14703029.0
(22) Anmeldetag: 30.01.2014
(51) Int. Cl.: F16H 1/32, F16H 49/00

(54) **TAUMELGETRIEBE**
WOBBLE MECHANISM
ENGRENAGE OSCILLANT

(30) Priorität: 30.01.2013 AT 632013
(43) Veröffentlichungstag der Anmeldung: 09.12.2015
(73) Patentinhaber: Puchhammer, Gregor, 1130 Wien (AT)
(72) Erfinder: Puchhammer, Gregor, 1130 Wien (AT)
(74) Vertreter: Stornebel, Kai
(86) Internationale Anmeldenummer: PCT/EP2014/000255
(87) Internationale Veröffentlichungsnummer: WO 2014/117941

(56) Entgegenhaltungen:
- EP-A1- 0 048 593
- AT-A1- 508 205
- DE-A1- 2 249 068
- DE-A1- 10 028 964
- US-A- 3 540 307

## Beschreibung

Die Erfindung bezieht sich auf ein Taumelgetriebe mit einem auf einer Eingangswelle angeordneten Taumelkörper, auf dessen Außenseite Magnete angeordnet sind, die mit in einem Gehäuse angeordneten Magneten zur Übertragung des Drehmomentes auf eine Ausgangswelle zusammenwirken.

Derartige Taumelgetriebe sind z.B. in dergattungsgemässen Schrift AT 508205 B1 gezeigt und beschrieben. Die bekannten Getriebe arbeiten äußerst leise und haben auch sonst wesentliche Vorteile gegenüber Taumelgetrieben mit Zahnkränzen.

Die DE 100 28 964 A1 beschreibt einen Antrieb sowie ein Verfahren zum Betreiben eines Antriebes. Ein Taumelgetriebe weist einen Taumelkörper mit einer planverzahnten Stirnseite, die in eine ebenfalls planverzahnte, nicht mitdrehende Scheibe eingreift. Auf der der Planverzahnung gegenüberliegenden Seite ist der Taumelkörper mit Permanentmagneten ausgestattet, die einem Spulenkörper zugewandt sind, der ebenfalls nicht mitdrehend ausgebildet ist.

Die Spulen werden jeweils versetzt bestromt, so dass sie ein magnetisches Feld erzeugen, das auf die Permanentmagnete an dem Taumelkörper wirkt. Hierdurch wird eine Taumelbewegung des Trommelkörpers hervorgerufen, durch die die Zähne des Taumelkörpers in die Zähne der nicht mitdrehenden Scheibe eingreifen. Da der Taumelkörper und die nicht mitdrehende Scheibe über eine unterschiedliche Zähnezahl verfügen, wird auf diese Weise ein Drehmoment übertragen.

Die Erfindung hat es sich zum Ziel gesetzt, ein Taumelgetriebe der eingangs genannten Art zu schaffen, das weitere wesentliche Vorteile aufweist.

Erreicht wird dies durch ein Taumelgetriebe mit den Merkmalen des Hauptanspruches. Vorteilhafte Weiterbildungen der Erfindung sind in den Unteransprüchen, der Beschreibung und den Figuren offenbart.

Durch die erfindungsgemäße Maßnahme kann gegenüber den bekannten Taumelgetrieben, bei denen, sofern nicht eine Getriebestufe mit Verzahnungen ausgebildet wird, mindestens drei Magnetgetriebestufen erforderlich sind, eine Magnetgetriebestufe erspart werden. Die Übertragung des Drehmomentes wird gegenüber den bekannten Taumelgetrieben mit Magneten auch steifer.

Bei einer Ausführungsform der Erfindung kann das Winkelgelenk ein Kardangelenk oder eine magnetische Kupplung sein. Eine andere Ausführungsform der Erfindung zeichnet sich dadurch aus, dass das Winkelgelenk ein Gleichlaufgelenk ist.

Um im Rahmen der Erfindung einen variablen Winkelversatz zwischen der Eingangswelle und der Ausgangswelle zu erreichen, kann die Ausgangswelle gegenüber dem mit den Magneten versehenen Gehäuse schwenkbar sein.

Hierzu ist zweckmäßig die Ausgangswelle in einem Schwenkgehäuse gelagert, das gegenüber dem mit den Magneten versehenen Gehäuse schwenkbar ist.

Nachstehend ist die Erfindung anhand von in den Zeichnungen dargestellten Ausführungsbeispielen näher beschrieben, ohne auf diese Beispiele beschränkt zu sein.

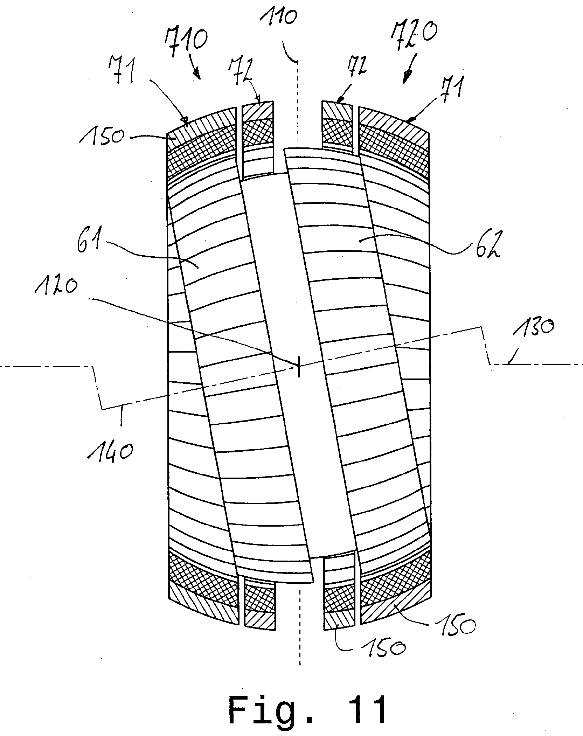

Dabei zeigen:
Fig. 1 einen Längsschnitt durch ein erfindungsgemäßes Taumelgetriebe mit einem Kardangelenk;
Fig. 2 einen Schnitt entlang II-II in Figur 1;
Fig. 3 einen Längsschnitt durch ein Taumelgetriebe nach der Erfindung mit einem Gleichlaufgelenk;
Fig. 4 einen Schnitt entlang IV-IV in Fig. 3;
Fig. 5 einen Längsschnitt durch ein erfindungsgemäßes Taumelgetriebe mit einem variablen Winkelversatz zwischen der Eingangswelle und der Ausgangswelle;
Fig. 6 einen Schnitt entlang VI-VI in Fig. 5;
Fig. 7 eine schaubildliche Ansicht des Taumelgetriebes nach den Figuren 5 und 6;
Figur 8 eine Schnittdarstellung aus einem Taumelgetriebe;
Figur 9 eine Variante der Figur 8;
Figur 10 eine Detaildarstellung eines Taumelgetriebes;
Figur 11 eine Variante der Figur 10;
Figur 12a eine Seitenansicht auf einen Taumelkörper;
Figur 12b eine Draufsicht auf einen Taumelkörper in einem Gehäuse;
Figur 13 eine Detailansicht der Figur 12b;
Figur 14 eine weitere Variante der Figur 10;
Figur 15 Varianten der Magnetanordnung;
Figuren 16
und 17. Darstellungen einer Variante der Figur 11.

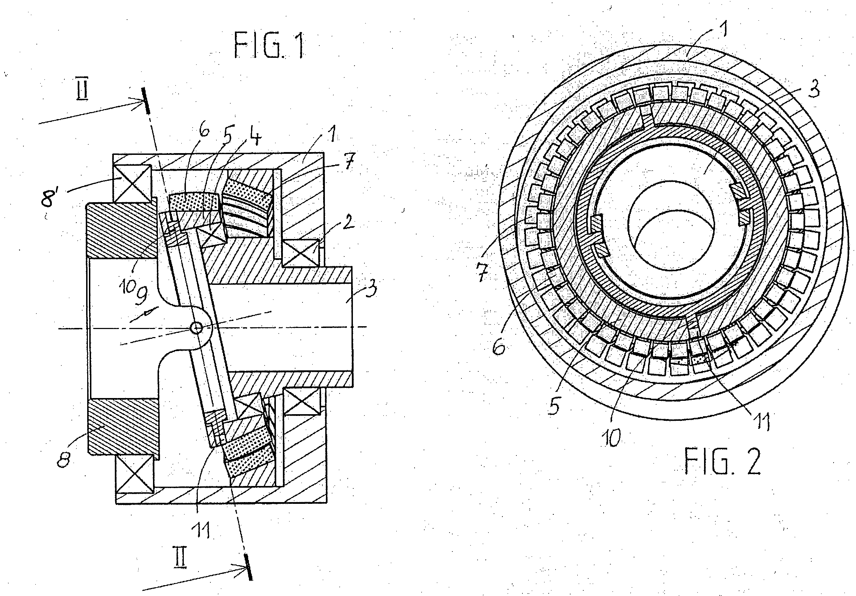

Gemäß Figur 1 ist in einem Gehäuse 1 mittels eines Lagers 2 eine Eingangswelle 3 gelagert. Die Eingangswelle 3 trägt über Lager 4 einen Taumelkörper 5, der an seinem äußeren Umfang mit Magneten 6 bestückt ist.

Im Gehäuse 1 sind verschiebbar Magnete 7 angeordnet, die beim Umlauf des Taumelkörpers 5 bzw. der Magnete 6 mit diesen zusammenarbeiten.

Eine über Lager 8' im Gehäuse 1 gelagerte Ausgangswelle 8 ist über ein Kardangelenk 9 mit dem Taumelkörper 5 verbunden. Das Kardangelenk 9 weist Wellenstummel 10 auf, die in Bohrungen 11 des Taumelkörpers 5 eingreifen.

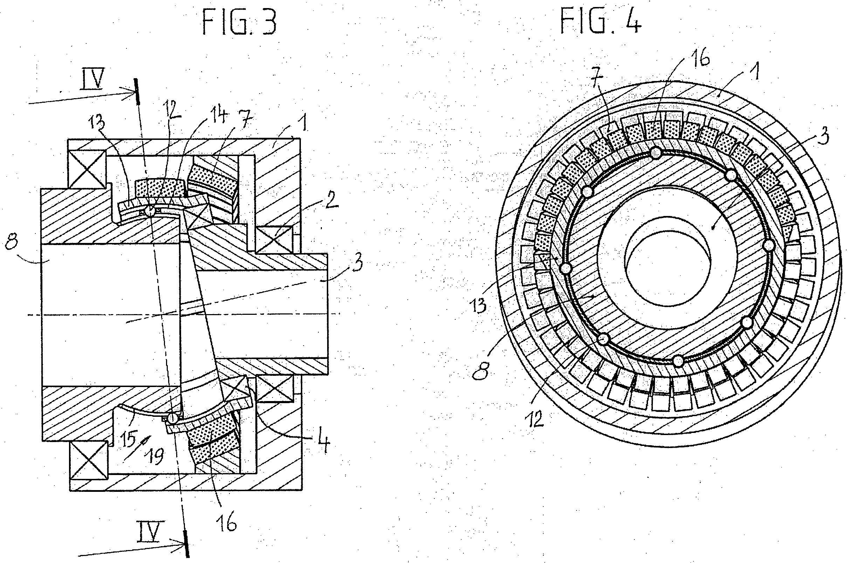

Bei einer Ausführungsform nach den Figuren 3 und 4 ist, so wie beim Ausführungsbeispiel nach den Figuren 1 und 2, in einem Gehäuse 1 mittels eines Lagers 2 eine Eingangswelle 3 gelagert. Über das Lager 4 trägt die Eingangswelle 3 einen als Außenschale für Wälzkörper 12 ausgebildeten Taumelkörper 13, wobei die Wälzkörper 12 in Laufbahnen 14 des bogenförmigen Taumelkörpers 13 beweglich sind.

Auf der Ausgangswelle 8 mit der Lagerung 8' sind bogenförmige Laufbahnen 15 angeordnet, die mit den Laufbahnen 14 bzw. den darin beweglichen Wälzkörpern 12 zusammenarbeiten. Es wird dadurch ein Gleichlaufgelenk 19 gebildet, das den Taumelkörper 13 mit der Ausgangswelle 8 verbindet.

Am Außenumfang des schalenförmigen Taumelkörpers 13 sind Magnete 16 angeordnet. Im Gehäuse 1 sind, wie beim Ausführungsbeispiel nach den Figuren 1 und 2, Magnete 7 verschiebbar gelagert. Diese Magnete 7 arbeiten mit den Magneten 16 im Taumelkörper 13 zusammen.

Bei beiden Ausführungsbeispielen wird bei Drehung der Eingangswelle 3 der Taumelkörper 5, 13 bewegt und überträgt über die Magnete 6 bzw. 16, 17 das Drehmoment auf die Ausgangswelle 8. Dies geschieht vorzugsweise über ein Winkelgelenk.

Es ist ersichtlich, dass für die Übertragung des Drehmomentes von der Eingangswelle 3 auf die Ausgangswelle 8 nur zwei Magnetkränze erforderlich sind. Beim bekannten Taumelgetriebe nach der AT 508205 B1 waren entweder Zahnkränze oder drei Magnetkränze notwendig.

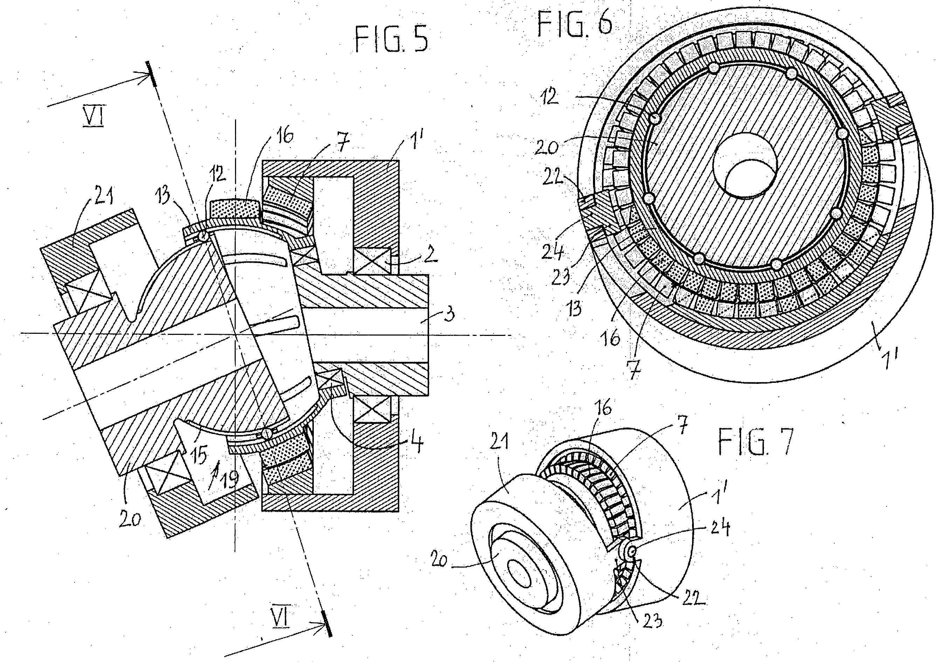

Beim Ausführungsbeispiel nach den Figuren 5 bis 7 werden für gleiche Teile die gleichen Bezugszeichen wie bei der Beschreibung des Ausführungsbeispieles nach den Figuren 3 und 4 verwendet.

Unterschiedlich gegenüber dem vorstehend beschriebenen Ausführungsbeispiel ist, dass die Ausgangswelle 20 in einem Schwenkgehäuse 21 gelagert ist, wobei das Schwenkgehäuse 21 gegenüber dem Gehäuse 1' schwenkbar ist.

Hierzu ist, wie aus Figur 7 ersichtlich ist, das Gehäuse 1' mit zwei Lappen 22 und das Schwenkgehäuse 21 mit zwei Lappen 23 versehen, wobei durch die Lappen 22, 23 Schwenkachsen 24 gesteckt sind.

Generell kann dieses Schwenkgehäuse 21 gleichzeitig um eine weitere, zweite Achse verschwenkbar angeordnet sein. Ebenso ist eine Ausbildung des Gelenkes als Kugelgelenk denkbar, so dass ein Schwenken des Schwenkgehäuses in zwei voneinander unabhängigen Achsrichtungen möglich ist.

Ein Einsatzgebiet für diese Ausführungsform könnte z.B. ein Vorderradantrieb für einen PKW sein, bei dem das Untersetzungsgetriebe im Gelenk zwischen Antriebswelle und Vorderrad eingebaut ist. Ein weiteres Gleichlaufgelenk wäre damit erspart, weil es schon im Antriebswellenstrang vorhanden ist. Aber auch die Verwendung bei anderen Getrieben, bei denen die Ausgangswelle gegenüber der Eingangswelle winkelversetzt ist, ist möglich.

Im Rahmen der Erfindung sind zahlreiche Abänderungen möglich. Insbesondere kann die Ausbildung der Winkelgelenke gegenüber den beschriebenen Gelenken mehrfach variiert werden.

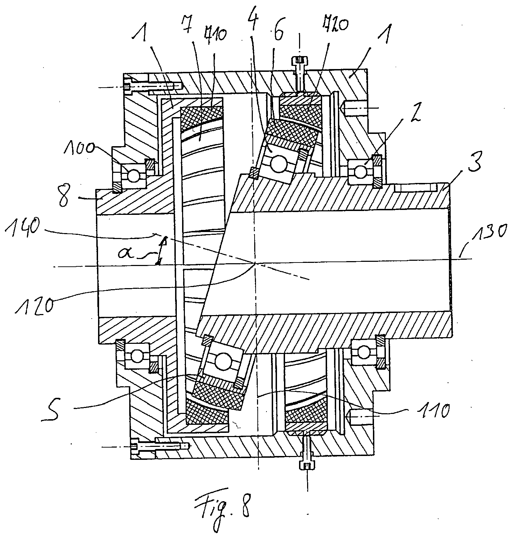

In der Figur 8 ist ein Taumelgetriebe mit einem Gehäuse 1 gezeigt, in dem ein Lager 2 zur Lagerung einer Eingangswelle 3 angeordnet ist. Die Figur 8 zeigt das Taumelgetriebe aus Übersichtlichkeitsgründen ohne Winkelgelenk 9, 19, die Ausführungen zu den Taumelgetrieben gelten jedoch grundsätzlich auch für Taumelgetriebe mit angeschlossenem Winkelgetriebe 9, 19. Die Eingangswelle 3 ist als Hohlwelle ausgebildet. Auf der Eingangswelle 3, die um eine Drehachse 130 rotiert, ist ein Taumelkörper 5 drehbar auf einem Lager 4 gelagert. Der Taumelkörper 5 dreht sich um eine Taumelachse 140, die um einen Winkel α zu der Drehachse 130 der Eingangswelle 3 verkippt ist. Bei einer Drehung der Eingangswelle 3 um die Drehachse 130 erfolgt somit eine Taumelbewegung des Taumelkörpers 5 um einen Taumelpunkt 120 herum, der im Schnittpunkt der Drehachse 130, der Taumelachse 140 und einer Taumelebene 110 liegt. Bei einer Drehung der Eingangswelle 3 um die Drehachse 130 führt der Taumelkörper 5 eine taumelnde Bewegung aus, wenn die Eingangswelle 3 relativ zu dem Taumelkörper 5 oder dem Gehäuse 1 gedreht wird.

Auf der Außenseite des Taumelkörpers 5 sind Außenmagneten 6 angeordnet, im dargestellten Ausführungsbeispiel mit in Umfangsrichtung alternierenden Polaritäten. Die Außenkontur der Außenmagneten 6 ist so ausgebildet, dass sie gleichbeabstandet zu einer sphärischen Oberfläche verläuft, also ein Segment oder einen scheibenartigen Ausschnitt einer sphärischen Oberfläche bildet.

In dem Gehäuse sind zwei Innenmagnetbereiche 710, 720 angeordnet, die mit Innenmagneten 7 bestückt sind. Die Innenmagnete 7 sind umlaufend in den beiden Innenmagnetbereichen 710, 720 angeordnet, wobei diese beiderseits der Taumelebene 110 positioniert sind. Der erste Innenmagnetbereich 710 ist in einem beweglich gelagerten Teil des Gehäuses 1 angeordnet, der zweite Innenmagnetbereich 720 ist in einem stationären Teil des Gehäuses 1 gelagert. Der bewegliche Teil des Gehäuses 1 ist über das Lager 100 beweglich an dem stationären Gehäuseteil des Gehäuses 1 gelagert und dient gleichzeitig als Abtriebswelle 8, die ebenfalls als Hohlwelle ausgebildet ist. Beide Innenmagnetbereiche 710, 720 sind in einem gleichen Abstand von der Taumelebene 110 in dem Gehäuse 1 angeordnet, so dass bei einer Taumelbewegung die jeweils gegenüberliegenden Außenmagnete 6 des Taumelkörpers 5 diametral gegenüberliegend mit Innenmagneten 7 der jeweiligen Innenmagnetbereiche 710, 720 wechselwirken. Durch die symmetrische Gestaltung werden freie Momente in dem Taumelgetriebe vermindert oder vermieden.

Diese Anordnung der Innenmagnetbereiche 710, 720 ist jedoch nicht notwendig.

Die Anzahl der Außenmagnete 6 unterscheidet sich von der Anzahl der Innenmagnete 7 um zumindest einen Magneten, so dass bei einer Taumelbewegung durch anziehende und abstoßende Kräfte zwischen den Innenmagneten 7 und Außenmagneten 6 eine Relativbewegung zwischen dem Taumelkörper 5 und dem Gehäuse 1 stattfindet, was dazu führt, dass bei einer vollständigen Taumelbewegung, also bei einer vollständigen Umdrehung der Eingangswelle 3 bei einer Differenz der Innenmagneten 7 zu den Außenmagneten 6 um einen Magneten die Abtriebswelle 8 um einen Magneten verdreht wird. Je nach Anzahl der Magnete ergibt sich eine größere oder kleinere Übersetzung.

Das gesamte Taumelgetriebe arbeitet berührungslos, das heißt, dass zwischen den Innenmagneten und Außenmagneten keine Reibung auftritt und die Momentenübertragung kraftschlüssig über die anziehenden und abstoßenden Kräfte der Magneten erfolgt.

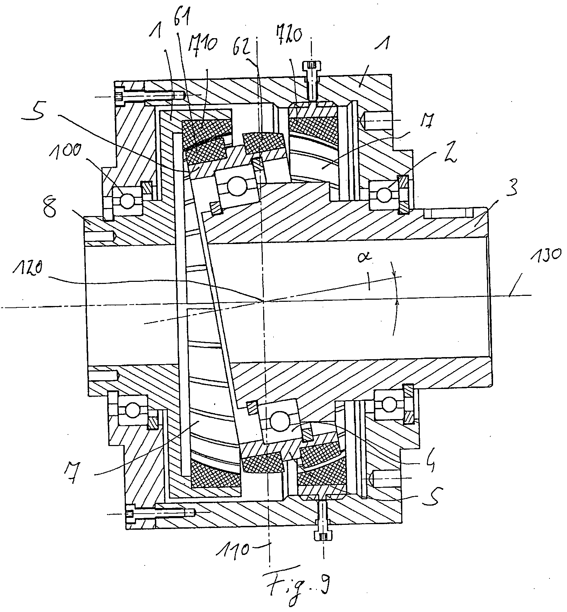

Eine Variante ist in der Figur 9 dargestellt, bei der nicht nur eine Reihe von Außenmagneten 6 vorhanden ist, sondern zwei Bereiche 61, 62 mit Außenmagneten 6, die an dem Taumelkörper 5 angeordnet sind und bei der Taumelbewegung überwiegend auf je einer Seite der Taumelebene 110 verschwenken. Durch die Anordnung von zwei Bereichen 61, 62 von Außenmagneten 6 ist es möglich, den Taumelwinkel α zu verringern oder beispielsweise eine besonders hohe Getriebeuntersetzung zu generieren.

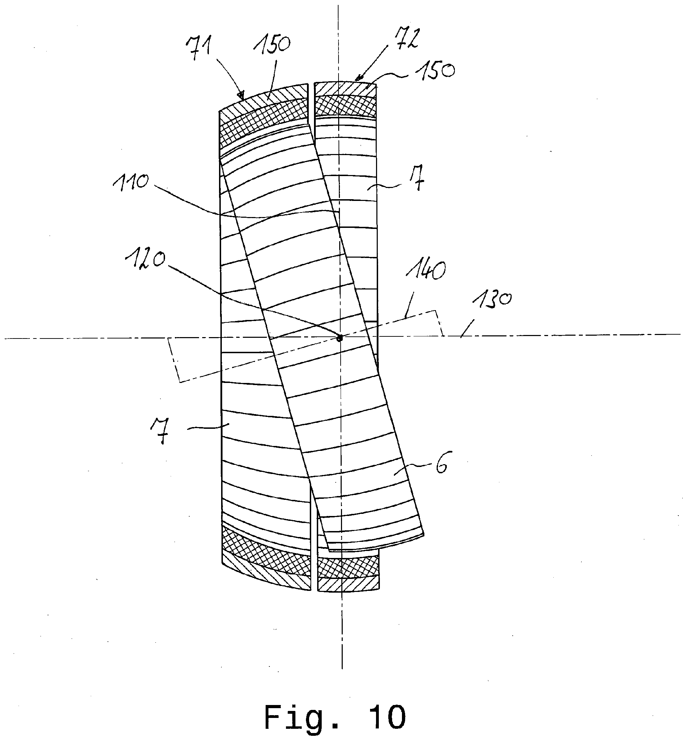

Zur Verbesserung des Wirkungsgrades oder des übertragbaren Momentes eines Taumelgetriebes, insbesondere zur Erhöhung der Momentendichte, also des Verhältnisses des übertragbaren Momentes zum Gewicht des Taumelgetriebes, ist vorgesehen, dass statt nur einer Reihe Innenmagnete 7 zwei in Axialrichtung hintereinander angeordnete Ringreihen 71, 72 von Innenmagneten angeordnet sind, wie dies in der Figur 10 dargestellt ist. Figur 10 zeigt in einer Teilschnittdarstellung die Einbausituation gemäß Figur 8 mit nur einem Innenmagnetbereich. Die übrigen Komponenten des Taumelgetriebes sind nicht dargestellt, entsprechen aber im Wesentlichen der Ausführungsform gemäß Figur 8, wobei auch das Taumelgetriebe nur mit einem Innenmagnetbereich 710 funktionieren würde.

Figur 10 zeigt die erfindungsgemäße Ausgestaltung, bei der Innenmagnete 7 umlaufend in zwei hintereinander angeordneten Ringreihen 71, 72 angeordnet sind. Hintereinander heißt hier, in Axialrichtung bezüglich der Drehachse 130 gesehen hintereinander. Die erste Ringreihe 71 weist eine Anzahl von Innenmagneten 7 auf, die in einer Aufnahme, die auch gleichzeitig einen magnetischen Rückschluss 150 bildet, aufgenommen sind. Die Aufnahme kann aus Kunststoff oder Metall gebildet sein, die Einzelmagnete 7 können eingeklebt, eingeschweißt oder eingeklemmt sein. Vorteilhafterweise sind die Innenmagnete 7 abwechselnd mit alternierender Polarität angeordnet, grundsätzlich ist es auch möglich, abweichende Orientierungen vorzusehen. Axial vor der ersten Ringreihe 71 ist eine zweite Ringreihe 72 mit Innenmagneten 7 angeordnet, die ebenfalls über einen außen angeordneten Rückschluss 150 magnetisch miteinander gekoppelt sind, so dass eine Radialmagnetisierung vorliegt. Die Anzahl der Innenmagneten der ersten Ringreihe 71 und der zweiten Ringreihe 72 ist gleich, allerdings ist die zweite Ringreihe 72 relativ zu der ersten Ringreihe 71 verdreht, so dass eine Momentenübertragung auf den beweglichen Teil des Gehäuses 1 und damit auf die Abtriebswelle 8 auch für den Teil der Außenmagneten 6 möglich ist, die aufgrund der Taumelbewegung axial außerhalb der ersten Ringreihe 71 befindlich sind. Im dargestellten Ausführungsbeispiel befinden sich diese im Bereich der unteren Hälfte des Taumelkörpers.

Aufgrund der Verdrehung der ersten Ringreihe 71 relativ zu der zweiten Ringreihe 72 ist es möglich, dass auch der untere Teil des Taumelkörpers 5 mit den darauf angeordneten Außenmagneten 6, die im Ausführungsbeispiel gemäß der Figur 8 nicht mehr zur Kraftübertragung beitragen könnten, mit den Innenmagneten 7 der zweiten Ringreihe 72 in Wechselwirkung tritt, wobei aufgrund der Verdrehung keine entgegenwirkenden Momente auftreten, wodurch insgesamt höhere Momente bei nahezu gleichem Bauraum übertragen werden können.

Die Außenkontur der Außenmagnete 6 ist vorteilhafterweise sphärisch, mit einem Mittelpunkt, der dem Taumelpunkt 12 entspricht. Dadurch ist es möglich, dass bei einer korrespondierenden Formgebung zu der Innenkontur der Innenmagnete 7 ein gleichbleibender, minimaler Luftspalt zwischen den Außenmagneten 6 und den Innenmagneten erzielt werden kann,

In dem dargestellten Ausführungsbeispiel ist die zweite Ringreihe 72 schmaler als die erste Ringreihe 71, die zweite Ringreihe 72 kann zumindest so breit sein, dass die bei einer Taumelbewegung über die erste Ringreihe 71 hinausstehenden Außenmagnete 6 größtenteils abgedeckt werden, idealerweise werden sie vollständig abgedeckt. Die Außenmagnete 6 müssten nicht vollständig aus der ersten Ringreihe 7 herausgeschwenkt werden.

Eine Variante der Erfindung ist in der Figur 11 gezeigt, bei der analog zu der Ausgestaltung gemäß Figur 9 zwei Innensegmentbereiche 710, 720 mit jeweils einer ersten Ringreihe 71 und einer zweiten Ringreihe 72 angeordnet sind. Auf dem Taumelkörper sind zwei Bereiche 61, 62 mit Außenmagneten 6 vorgesehen, von denen der erste Bereich 61 nur mit dem ersten Innensegmentbereich 710 wechselwirkt, während der zweite Bereich 62 der Außenmagnete 6 nur mit dem zweiten Innenmagnetbereich 720 wechselwirkt. Auch hier sind für jeden Innenmagnetbereich 710, 720 jeweils zwei Ringreihen 71, 72 mit jeweils der gleichen Magnetzahl vorgesehen, wobei die jeweils zweite Ringreihe 72 um einen Magneten oder um eine Magnetpolung versetzt zu der jeweils ersten Ringreihe 71 angeordnet ist. Mit der Ausgestaltung gemäß der Figur 4 wird das maximal übertragbare Moment erhöht, ebenso ergibt sich eine höhere Momentendichte und eine größere Steifigkeit des Taumelgetriebes.

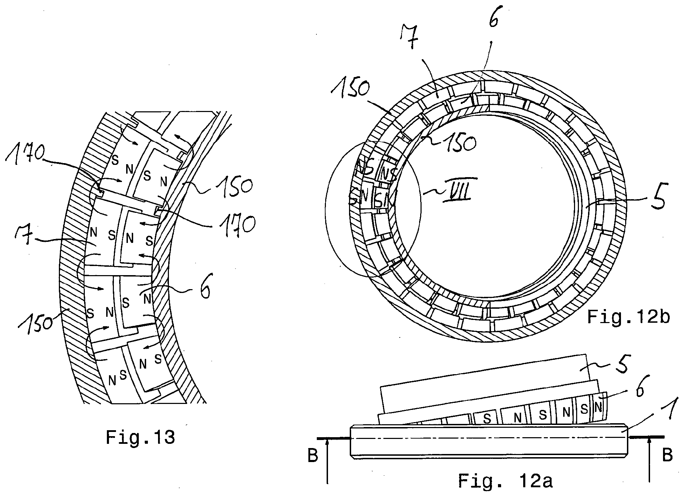

In der Figur 12a ist eine Seitenansicht des Taumelkörpers 5 mit den Außenmagneten 6 in einem eingebauten Zustand gezeigt, wobei der Taumelkörper 5 nur teilweise mit den innerhalb des Gehäuses 1 angeordneten Innenmagneten wechselwirkt. Die zweite Ringreihe der Innenmagneten ist nicht dargestellt, um die Zuordnung der Komponenten während der Taumelbewegung zu zeigen.

In der Figur 12b ist in einer Draufsicht ein Taumelkörper 5 mit darauf angeordneten Außenmagneten 6 gezeigt, der in einem Gehäuse, beispielsweise dem beweglichen Gehäuseteil, das die Abtriebswelle 8 ausbildet, angeordnet ist. In dem Gehäuse sind die Innenmagnete 7 angeordnet, die über einen magnetischen Rückschluss 150 miteinander gekoppelt sind. Die Außenmagnete 6 des Taumelkörpers 5 sind ebenfalls über einen innenliegenden magnetischen Rückschluss 150 miteinander magnetisch gekoppelt. In der Figur 12b ist zu erkennen, dass die Innenmagnete 7 mit alternierender Polung umlaufend angeordnet sind, ebenso sind die Außenmagnete 6 auf dem Taumelkörper 5 mit alternierender Magnetpolung angeordnet. Der Figur 12b ist zu entnehmen, dass 24 Innenmagnete 7 und 26 Außenmagnete 6 vorhanden sind, wobei durch die Taumelbewegung des Taumelkörpers 5 die Außenmagnete 6 und die Innenmagnete 7 versetzt zueinander bewegt werden, so dass teilweise anziehende und abstoßende Kräfte wirken, was dazu führt, dass die Innenmagnete 7 relativ zu den Außenmagneten 6 verdreht werden, ohne dass ein mechanischer Kontakt zwischen den kraftübertragenden Komponenten stattfindet.

In der Figur 13 ist eine Detailansicht der Anordnung der Magnete 6, 7 im Bereich des jeweiligen magnetischen Rückschlusses 150 gezeigt. Die Innenmagnete 7 sind mit alternierender Polung an dem äußeren magnetischen Rückschluss 150 festgelegt, beispielsweise festgeklebt, wobei zwischen den einzelnen Innenmagneten 7 Vorsprünge angeordnet oder die Magnete 7 in Nuten eingebettet sind, um eine verbesserte Positionierbarkeit der jeweiligen Magnete 7 bei der Montage zu erreichen. Die Stege 170 erleichtern es, die Magnete 6, 7 in die zwischen den Stegen 170 gebildeten Nuten einzusetzen. Dadurch ergibt sich eine größere mechanische Stabilität. Zwischen den einzelnen Magneten 6, 7 kann ein Klebstoff angeordnet sein, um die Magnete 6, 7 zu kapseln und eine größere mechanische Stabilität zu erreichen.

Der magnetische Rückschluss 150 kann jeweils einteilig ausgebildet sein, alternativ dazu kann eine Trennung des magnetischen Rückschlusses parallel zur Taumelebene 110 erfolgen, so dass eine Verdrehbarkeit der ersten Ringreihe 71 relativ zu der zweiten Ringreihe 72 ebenso gegeben ist wie eine axiale Verschiebbarkeit. Vorteilhaft ist eine sphärische Ausgestaltung zumindest der Innenkontur der Innenmagnete 7 und der Außenkontur der Außenmagnete 6.

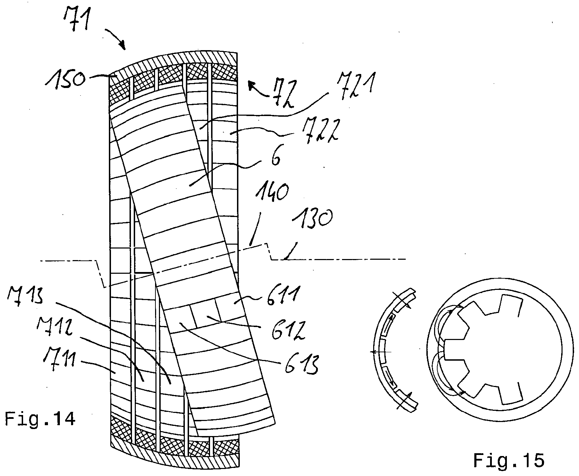

In der Figur 14 ist eine weitere Variante der Erfindung gezeigt, der Grundaufbau entspricht dem der Figur 10. Statt nur einteilige Innenmagnete 7 vorzusehen, sind in dem dargestellten Ausführungsbeispiel die Innenmagnete 7 segmentiert, die erste Ringreihe 71 weist drei hintereinander angeordnete Magnetsegmente 711, 712, 713 auf, die jeweils die gleiche Magnetpolung aufweisen und in Axialrichtung hintereinander angeordnet sind. Die zweite Ringreihe 72 weist zwei Magnetsegmente 721, 722 auf, die ebenfalls die gleiche Polung aufweisen. Die Magnetpolzahl der beiden Ringreihen 71, 72 ist gleich, die Segmente 721, 722 der zweiten Ringreihe 72 sind um einen Magnet verdreht zu den Segmenten 711, 712, 713 der ersten Ringreihe 71 angeordnet. Auch die Außenmagnete 6 können segmentiert ausgebildet sein, die Außenmagnetsegmente 611, 612, 613 sind in der Figur 14 angedeutet.

Durch die Segmentierung kann eine erleichterte Formgebung der Innenkontur und Außenkontur der Innenmagnetbereiche 710, 720 und der Außenmagnete 6 erreicht werden, statt einer kontinuierlichen und nahezu sphärischen Ausgestaltung kann eine polygonale Form hergestellt werden, die der sphärischen Form angenähert ist, so dass zwar Ungleichmäßigkeiten im Luftspalt zwischen den Innenmagneten 7 und den Außenmagneten 6 vorhanden sind, diese Ungleichmäßigkeiten jedoch durch den verringerten Aufwand bei der Herstellung der jeweiligen Magnetsegmente wirtschaftlich vertretbar sein können. Auch können Magnetsegmente als zylindrische Segmente ausgestaltet werden, die gegebenenfalls auch in Kombination mit anders gestalteten Magnetelementen oder ausschließlich verwendet werden können.
Durch die segmentierte Ausgestaltung der Innenmagnete 7 oder Außenmagnete 6 wird die unterschiedliche Wärmeausdehnung der Magnete im Verhältnis zu dem magnetischen Rückschluss 150 kompensiert, eine Segmentierung verringert die absolute Längenausdehnung aufgrund der verkürzten Einzelsegmente.

Je größer der Taumelwinkel α ist, desto größer sind die übertragbaren Drehmomente. Neben einer Ausgestaltung der Außenmagnete 6 und der Innenmagnete 7 als Einzelmagnete ist es auch möglich, die radiale Magnetisierung durch einen Magnetring zu erreichen, wie er in der Figur 15 in der rechten Darstellung gezeigt ist. Ebenso ist es möglich, die Magnete im Rahmen eines Halbach-Arrays anzuordnen, wie es in der linken Darstellung der Figur 15 gezeigt ist.

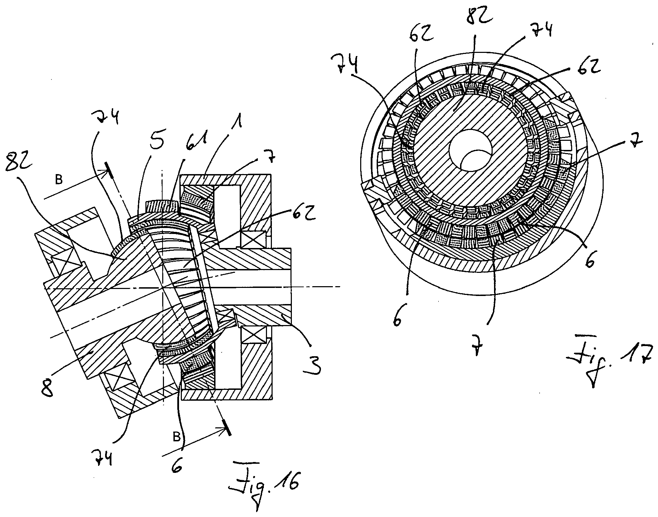

Figur 16 zeigt eine weitere Ausgestaltung des Taumelgetriebes, bei dem das Winkelgelenk eine magnetische Kupplung ist. in dem Gehäuse 1 ist die Eingangswelle 3 gelagert, die den Taumelkörper 5 trägt, an dem sich Außenmagnete 6 befinden. Diese wechselwirken mit im Gehäuse 1 angeordneten Magneten 7 in der bereits beschriebenen Weise.

Anders als im Figur 11 gezeigten Ausführungsbeispiel ist der Taumelkörper 5 im in Figur 16 gezeigten Ausführungsbeispiel als Hohlkörper ausgebildet. Während die Magnete 6 an der Außenseite den ersten Bereich 61 bilden, ist an der Innenseite des hohl ausgestalteten Taumelkörpers 5 der zweite Bereich 62 aus Magneten angeordneten, die mit Magneten 74 zusammenwirken, die an der Außenseite eines im gezeigten Ausführungsbeispiel kugelförmigen Elementes 82 angeordnet sind, das Teil der Ausgangswelle 8 ist. Auch in diesem Ausführungsbeispiel wird wie im in Figur 11 gezeigten Beispiel das Drehmoment von der Eingangswelle 3 auf den Taumelkörper 5 und von diesem über die magnetische Kopplung der Magneten 62 und 74 auf die Ausgangswelle 8 übertragen.

Figur 17 zeigt die Schnittdarstellung entlang der Linie B-B aus Figur 16. Man erkennt, dass die Magnete 6 bzw. 61 mit den Magneten 7 zusammenwirken, während die Magnete 74, die an dem Bauteil 82 befestigt sind, mit den Magneten 62 an der Innenseite des Taumelkörpers 5 zusammenwirken. Sowohl die in Figur 11 als auch die in den Figuren 16 und 17 gezeigte magnetische Kopplung ist vorliegend unter einem Winkelgelenk mit erfasst. Diese Kopplung funktioniert besonders gut, wenn die Magneten 62 und 74 in der gleichen Anzahl vorliegen, wie dies in den Figuren dargestellt ist. In diesem Fall findet eine besonders gute Kopplung des Taumelkörpers 5 an die Ausgangswelle 8 statt.

## Patentansprüche

1. Taumelgetriebe mit einem auf einer Eingangswelle (3) angeordneten Taumelkörper (5,13), auf dessen Außenseite Magnete (6,16) angeordnet sind, die mit in einem Gehäuse (1,1') angeordneten Magneten (7) zur Übertragung des Drehmomentes auf eine Ausgangswelle (8, 20) zusammenwirken, **dadurch gekennzeichnet, dass** der Taumelkörper (5,13) mit der Ausgangswelle (8,20) über ein Winkelgelenk (9,19) verbunden ist.

2. Taumelgetriebe nach Anspruch 1, **dadurch gekennzeichnet, dass** das Winkelgelenk ein Kardangelenk (9) oder eine magnetische Kupplung ist.

3. Taumelgetriebe nach Anspruch 1, **dadurch gekennzeichnet, dass** das Winkelgelenk ein Gleichlaufgelenk (19) ist.

4. Taumelgetriebe nach einem der Ansprüche 1 bis 3, **dadurch gekennzeichnet, dass** die Ausgangswelle (20) gegenüber dem mit den Magneten (7) versehenen Gehäuse (1') schwenkbar ist.

5. Taumelgetriebe nach Anspruch 4, **dadurch gekennzeichnet, dass** die Ausgangswelle (20) in einem Schwenkgehäuse (21) gelagert ist, das gegenüber dem mit den Magneten (7) versehenen Gehäuse (1') schwenkbar ist.

6. Taumelgetriebe nach einem der voranstehenden Ansprüche, **dadurch gekennzeichnet, dass** auf der Außenseite des Taumelkörpers (5) Außenmagneten (6) angeordnet sind, dass das Gehäuse (1) den Taumelkörper (5) zumindest teilweise umgibt und auf der Innenseite des Gehäuses (1) mit den Außenmagneten (6) wechselwirkende Innenmagneten (7) angeordnet sind, wobei die Anzahl der Außenmagneten (6) von der Anzahl der Innenmagneten (7) abweicht und eine radiale Magnetisierung vorliegt und die Innenmagnete (7) in zwei hintereinander angeordneten Ringreihen (71, 72) mit einer ersten Ringreihe (71) und einer zweiten Ringreihe (72) angeordnet sind, die zueinander verdreht sind.

7. Taumelgetriebe nach Anspruch 6, **dadurch gekennzeichnet, dass** die beiden Ringreihen (71, 72) die gleiche Anzahl an Innenmagneten (7) aufweisen und die erste Ringreihe (71) zu der zweiten Ringreihe (72) um einen Magneten verdreht ist.

8. Taumelgetriebe nach Anspruch 6 oder 7, **dadurch gekennzeichnet, dass** die Außenmagneten (6) eine gewölbte Außenkontur aufweisen.

9. Taumelgetriebe nach einem der Ansprüche 6 bis 8, **dadurch gekennzeichnet, dass** die Innenmagnete (7) eine gewölbte Innenkontur aufweisen.

10. Taumelgetriebe nach einem der Ansprüche 6 bis 9, **dadurch gekennzeichnet, dass** auf dem Taumelkörper (5) zwei in Axialrichtung der Eingangswelle (3) hintereinander angeordnete, voneinander getrennte Bereiche (61, 62) mit Außenmagneten (6) angeordnet sind, die jeweils mit zwei voneinander getrennten Innenmagnetbereichen (710, 720) wechselwirken.

11. Taumelgetriebe nach einem der Ansprüche 6 bis 10, **dadurch gekennzeichnet, dass** die Außenmagnete (6) oder Innenmagnete (7) oder sowohl Außenmagnete (6) als auch Innenmagnete (7) in Axialerstreckung segmentiert sind.

12. Taumelgetriebe nach einem der Ansprüche 6 bis 11, **dadurch gekennzeichnet, dass** die Außenmagnete (6) drehbar in dem Gehäuse (1) an einer Abtriebswelle (8) gelagert sind.

13. Taumelgetriebe nach einem der Ansprüche 6 bis 12, **dadurch gekennzeichnet, dass** die zweite Ringreihe (72) schmaler als die erste Ringreihe (71) ausgebildet ist.

14. Taumelgetriebe nach einem der Ansprüche 6 bis 13, **dadurch gekennzeichnet, dass** die zweite Ringreihe (72) nicht breiter als ein maximaler Überstand der Außenmagnete (6) über die erste Ringreihe (71) bei der Taumelbewegung ist.

15. Taumelgetriebe nach einem der Ansprüche 6 bis 14, **dadurch gekennzeichnet, dass** die erste Ringreihe (71) zu der zweiten Ringreihe (72) verstellbar ist.

16. Taumelgetriebe nach einem der voranstehenden Ansprüche, **dadurch gekennzeichnet, dass** die Magnete (6, 16, 7) formschlüssig in dem Taumelkörper (5) bzw. dem Gehäuse (1) gelagert sind.

17. Taumelgetriebe nach einem der voranstehenden Ansprüche, **dadurch gekennzeichnet, dass** die Magnete (6, 16, 7) mit alternierenden Polaritäten auf dem Taumelkörper (5) bzw. in dem Gehäuse (1) angeordnet sind.

18. Taumelgetriebe nach einem der voranstehenden Ansprüche, **dadurch gekennzeichnet, dass** die Magnete (6, 16, 7) als Einzelmagnete oder als multipoliger radial magnetisierter Ringmagnet ausgebildet sind.

19. Taumelgetriebe nach einem der voranstehenden Ansprüche, **dadurch gekennzeichnet, dass** die Magnete (6, 16, 7) in einem Halbach-Array angeordnet oder ausgebildet sind.

## Claims

1. A wobble mechanism having a wobble body (5, 13) which is arranged on an input shaft (3) and on the outer side of which magnets (6, 16) are arranged which interact with magnets (7) which are arranged in a housing (1, 1') in order to transmit the torque to an output shaft (8, 20), **characterized in that** the wobble body (5, 13) is connected to the output shaft (8, 20) via an angle joint (9, 19).

2. The wobble mechanism as claimed in claim 1, **characterized in that** the angle joint is a cardan joint (9) or a magnetic coupling.

3. The wobble mechanism as claimed in claim 1, **characterized in that** the angle joint is a constant velocity joint (19).

4. The wobble mechanism as claimed in one of claims 1 to 3, **characterized in that** the output shaft (20) can be pivoted with respect to the housing (1') which is provided with the magnets (7).

5. The wobble mechanism as claimed in claim 4, **characterized in that** the output shaft (20) is mounted in a pivoting housing (21) which can be pivoted with respect to the housing (1') which is provided with the magnets (7).

6. The wobble mechanism as claimed in one of the preceding claims, **characterized in that** outer magnets (6) are arranged on the outer side of the wobble body (5), **in that** the housing (1) surrounds the wobble body (5) at least partially and inner magnets (7) which interact with the outer magnets (6) are arranged on the inner side of the housing (1), the number of outer magnets (6) differing from the number of inner magnets (7) and there being a radial magnetization, and the inner magnets (7) being arranged in two ring rows (71, 72) which are arranged behind one another with a first ring row (71) and a second ring row (72) which are rotated with respect to one another.

7. The wobble mechanism as claimed in claim 6, **characterized in that** the two ring rows (71, 72) have the same number of inner magnets (7), and the first ring row (71) is rotated by one magnet with respect to the second ring row (72).

8. The wobble mechanism as claimed in claim 6 or 7, **characterized in that** the outer magnets (6) have a domed outer contour.

9. The wobble mechanism as claimed in one of claims 6 to 8, **characterized in that** the inner magnets (7) have a domed inner contour.

10. The wobble mechanism as claimed in one of claims 6 to 9, **characterized in that** two regions (61, 62) are arranged on the wobble body (5) which are arranged behind one another in the axial direction of the input shaft (3), are separate from one another, have outer magnets (6) and interact in each case with two inner magnet regions (710, 720) which are separate from one another.

11. The wobble mechanism as claimed in one of claims 6 to 10, **characterized in that** the outer magnets (6) or inner magnets (7) or both outer magnets (6) and inner magnets (7) are segmented in the axial extent.

12. The wobble mechanism as claimed in one of claims 6 to 11, **characterized in that** the outer magnets (6) are mounted rotatably in the housing (1) on an output shaft (8).

13. The wobble mechanism as claimed in one of claims 6 to 12, **characterized in that** the second ring row (72) is of narrower configuration than the first ring row (71).

14. The wobble mechanism as claimed in one of claims 6 to 13, **characterized in that** the second ring row (72) is not wider than a maximum projection of the outer magnets (6) beyond the first ring row (71) during the wobbling movement.

15. The wobble mechanism as claimed in one of claims 6 to 14, **characterized in that** the first ring row (71) can be adjusted with respect to the second ring row (72).

16. The wobble mechanism as claimed in one of the preceding claims, **characterized in that** the magnets (6, 16, 7) are mounted in a positively locking manner in the wobble body (5) and the housing (1).

17. The wobble mechanism as claimed in one of the preceding claims, **characterized in that** the magnets (6, 16, 7) are arranged with alternating polarities on the wobble body (5) and in the housing (1).

18. The wobble mechanism as claimed in one of the preceding claims, **characterized in that** the magnets (6, 16, 7) are configured as individual magnets or as a multi-pole radially magnetized ring magnet.

19. The wobble mechanism as claimed in one of the preceding claims, **characterized in that** the magnets (6, 16, 7) are arranged or configured in a Halbach array.

## Revendications

1. Mécanisme oscillant comportant un corps oscillant (5, 13) monté sur un arbre d'entrée (3), sur le côté extérieur duquel sont agencés des aimants (6, 16) qui coopèrent avec des aimants (7) agencés dans un boîtier (1, 1') en vue de transmettre le couple de rotation à un arbre de sortie (8, 20), **caractérisé en ce que** le corps oscillant (5, 13) est relié à l'arbre de sortie (8, 20) via un joint articulé (9, 19).

2. Mécanisme oscillant selon la revendication 1, **caractérisé en ce que** le joint articulé est un joint à la Cardan (9) ou un accouplement magnétique.

3. Mécanisme oscillant selon la revendication 1, **caractérisé en ce que** le joint articulé est un joint homocinétique (19).

4. Mécanisme oscillant selon l'une des revendications 1 à 3, **caractérisé en ce que** l'arbre de sortie (20) est apte à pivoter par rapport au boîtier (1') pourvu des aimants (7).

5. Mécanisme oscillant selon la revendication 4, **caractérisé en ce que** l'arbre de sortie (20) est monté dans un boîtier de pivotement (21) qui est apte à pivoter par rapport au boîtier (1') pourvu des aimants (7).

6. Mécanisme oscillant selon l'une des revendications précédentes, **caractérisé en ce que** des aimants extérieurs (6) sont agencés sur le côté extérieur du corps oscillant (5), **en ce que** le boîtier (1) entoure au moins partiellement le corps oscillant (5), et **en ce que** des aimants intérieurs (7) sont agencés sur le côté intérieur du boîtier (1), qui viennent en interaction avec les aimants extérieurs (6),
dans lequel le nombre d'aimants extérieurs (6) diffère du nombre d'aimants intérieurs (7), il se présente une aimantation radiale, et les aimants intérieurs (7) sont agencés en deux rangées annulaires (71, 72) disposées l'une derrière l'autre et présentant une première rangée annulaire (71) et une seconde rangée annulaire (72) tournées l'une par rapport à l'autre.

7. Mécanisme oscillant selon la revendication 6, **caractérisé en ce que** les deux rangées annulaires (71, 72) ont le même nombre d'aimants intérieurs (7) et la première rangée annulaire (71) est tournée d'un aimant par rapport à la seconde rangée annulaire (72).

8. Mécanisme oscillant selon la revendication 6 ou 7, **caractérisé en ce que** les aimants extérieurs (6) présentent un contour extérieur bombé.

9. Mécanisme oscillant selon l'une des revendications 6 à 8, **caractérisé en ce que** les aimants intérieurs (7) présentent un contour intérieur bombé.

10. Mécanisme oscillant selon l'une des revendications 6 à 9, **caractérisé en ce que** sur le corps oscillant (5) sont prévues deux zones (61, 62) séparées l'une de l'autre, disposées l'une derrière l'autre en direction axiale de l'arbre d'entrée (3) et pourvues d'aimants extérieurs (6) qui viennent en interaction avec deux zones à aimants intérieurs (710, 720) séparées l'une de l'autre.

11. Mécanisme oscillant selon l'une des revendications 6 à 10, **caractérisé en ce que** les aimants extérieurs (6) ou les aimants intérieurs (7) ou à la fois les aimants extérieurs (6) et les aimants intérieurs (7) sont segmentés dans leur extension axiale.

12. Mécanisme oscillant selon l'une des revendications 6 à 11, **caractérisé en ce que** les aimants extérieurs (6) sont montés mobiles en rotation dans le boîtier (1) sur un arbre mené (8).

13. Mécanisme oscillant selon l'une des revendications 6 à 12, **caractérisé en ce que** la seconde rangée annulaire (72) est plus étroite que la première rangée annulaire (71).

14. Mécanisme oscillant selon l'une des revendications 6 à 13, **caractérisé en ce que** la seconde rangée annulaire (72) n'est pas plus large qu'un dépassement maximal des aimants extérieurs (6) au-delà de la première rangée annulaire (71) lors du mouvement oscillant.

15. Mécanisme oscillant selon l'une des revendications 6 à 14, **caractérisé en ce que** la première rangée annulaire (71) est déplaçable par rapport à la seconde rangée annulaire (72).

16. Mécanisme oscillant selon l'une des revendications précédentes, **caractérisé en ce que** les aimants (6, 16, 7) sont montés en coopération de formes dans le corps oscillant (5) ou dans le boîtier (1).

17. Mécanisme oscillant selon l'une des revendications précédentes, **caractérisé en ce que** les aimants (6, 16, 7) sont agencés avec des polarités alternantes sur le corps oscillant (5) ou dans le boîtier (1).

18. Mécanisme oscillant selon l'une des revendications précédentes, **caractérisé en ce que** les aimants (6, 16, 7) sont réalisés sous forme d'aimants individuels ou d'aimant annulaire multipolaire à aimantation radiale.

19. Mécanisme oscillant selon l'une des revendications précédentes, **caractérisé en ce que** les aimants (6, 16, 7) sont agencés ou réalisés en un réseau de Halbach.
